# EUROPÄISCHE PATENTSCHRIFT

(11) **EP 4 000 913 B1**
(45) Veröffentlichungstag und Bekanntmachung des Hinweises auf die Patenterteilung: **18.09.2024**
(21) Anmeldenummer: 20208619.5
(22) Anmeldetag: 19.11.2020
(51) Int. Cl.: B30B 9/24, A22C 17/04

(54) **VORRICHTUNG UND VERFAHREN ZUM TRENNEN VON STOFFEN UNTERSCHIEDLICHER FLIESSFÄHIGKEIT**
DEVICE AND METHOD FOR SEPARATING MATERIALS OF VARYING FLOWABILITY
DISPOSITIF ET PROCÉDÉ POUR LA SÉPARATION DE SUBSTANCES DE FLUIDITÉ DIFFÉRENTES

(43) Veröffentlichungstag der Anmeldung: 25.05.2022
(73) Patentinhaber: Nordischer Maschinenbau Rud. Baader GmbH + Co. KG, 23560 Lübeck (DE)
(72) Erfinder: Schwarz, Olaf, 23560 Lübeck (DE); Hanf, Friedemann, 23560 Lübeck (DE); Karsten, Uwe, 23560 Lübeck (DE); Härtlein, Joachim, 23560 Lübeck (DE); Fuchs, Michael, 23560 Lübeck (DE); Arndt, Henrik, 23560 Lübeck (DE)
(74) Vertreter: Stork Bamberger Patentanwälte PartmbB

(56) Entgegenhaltungen:
- WO-A1-87/06330
- CN-A- 102 986 820
- DE-B3- 102018 101 985
- DE-B3- 102018 131 533
- DE-B3- 102019 116 720
- DE-U1- 29 518 810
- GB-A- 201 190
- JP-U- S60 166 491
- US-A- 4 232 051

## Beschreibung

Die vorliegende Erfindung betrifft eine Vorrichtung zum Trennen von Stoffen unterschiedlicher Fließfähigkeit, umfassend eine Gehäusebasis, eine an der Gehäusebasis angeordnete, umlaufend angetriebene Hohltrommel mit einer perforierten Mantelfläche, ein von außen an die Hohltrommel unter Umschlingung eines Teils des Umfangs der Hohltrommel anpressbares endloses Pressband, das zusammen mit der Hohltrommel einen Einzugskeil für das Pressgut bildet, wobei das Pressband mittels mindestens einer Antriebswalze sowie mindestens einer Lagerwalze gelagert ist.

Des Weiteren betrifft die Erfindung ein Verfahren zum Einrichten der vorgenannten Vorrichtung zum Trennen von Stoffen unterschiedlicher Fließfähigkeit.

Derartige Vorrichtungen und Verfahren kommen in verschiedenen Industriebereichen zum Einsatz. Trennbar sind grundsätzlich Materialien, die ein voneinander abweichendes Fließverhalten aufweisen. Zum Einsatz gelangen derartige Vorrichtungen und Verfahren beispielsweise bei der Verwertung von Tierkörpern zum Abtrennen von Haut-, Fleisch- und/oder Sehnenanteilen von Knochen oder Gräten. Auch bei der Trennung des Fruchtfleisches von Schale, Stielen, Kernen oder Steinen von Gemüse oder Obst kommen diese zum Einsatz. Ein weiteres Einsatzfeld besteht in der Trennung von insbesondere von Verbundverpackungen, beispielsweise von Karton-Getränkeverpackungen, die aus mit Kunststofffolie und/oder Aluminiumfolie beschichteten Kartons bestehen.

Die auch als Press-/Trennmaschinen oder Weichseparatoren bezeichneten Vorrichtungen zum Trennen von Stoffen unterschiedlicher Fließfähigkeit umfassen in der Regel eine mit einer perforierten Mantelfläche versehene Hohltrommel und ein mit der Hohltrommel in einem Teilumfangsbereich in Wirkverbindung stehendes Pressband. Pressband und Hohltrommel sind jeweils beide angetrieben. Das zu trennende Pressgut gelangt in einen Einzugsbereich zwischen das elastische Pressband und die perforierte Hohltrommel. Das Pressband bildet zusammen mit der Hohltrommel in diesem Einzugsbereich einen Einzugskeil für das Pressgut.

Infolge unterschiedlicher Fließfähigkeiten der Teilbestandteile des Pressgutes werden fließfähigere Bestandteile durch die perforierte Mantelfläche der Hohltrommel von außen nach innen gedrückt.

Beim Einzug des Pressgutes sowie beim Trennen der Stoffe unterschiedlicher Fließfähigkeit wirken regelmäßig hohe Kräfte. Während des Betriebes kommt es dazu, dass der zwischen der Umfangsfläche der Hohltrommel und der Umfangsfläche der Andruckwalze vorhandene Spalt in der Nähe der Gehäusebasis eine geringere Spaltbreite aufweist, als dies in weiter von der Gehäusebasis entfernten Bereichen des Spaltes der Fall ist. Dies führt dazu, dass in Bereichen des Spaltes mit größerer Weite mehr Produkt eingezogen wird, als dies in Spaltbereichen geringerer Weite der Fall ist. Dies wirkt sich einerseits negativ auf die Qualität des Separierguts aus und erschwert andererseits die optionale Anpassung der Spaltbreite an die Erfordernisse des jeweiligen Separierprozesses. Pressgut, das sich in Bereichen mit größerer Spaltbreite befindet, passiert in der Regel nicht die Löcher der Hohltrommel und nimmt daher am eigentlich Separierprozess nicht teil. Das Dokument DE 295 18 810 U1 offenbart eine Vorrichtung zum Trennen von Stoffen unterschiedlicher Fließfähigkeit nach dem Oberbegriff des Anspruchs 1, sowie ein Verfahren nach dem Oberbegriff des Anspruchs 10.

Es ist daher Aufgabe der vorliegenden Erfindung, eine Vorrichtung vorzuschlagen, die eine präzise und komfortable Einstellung der Spaltbreite, und insbesondere eine möglichst parallele Ausrichtung der Mantelflächen von Andruckwalze und Hohltrommel, erlaubt. Des Weiteren besteht die Aufgabe darin, ein Verfahren zum Einrichten einer solchen Vorrichtung vorzuschlagen.

Die Aufgabe wird durch eine Vorrichtung mit den eingangs genannten Merkmalen dadurch gelöst, dass die Antriebswalze an einem Lagerbock gelagert ist und der Lagerbock an der Gehäusebasis positionsverstellbar angeordnet ist. Dies bietet den Vorteil, dass die Antriebswalze über den Lagerbock die auftretenden Haltekräfte aufnimmt und an die Gehäusebasis weiterleitet. Auf diese Weise ist die Antriebswalze sicher gelagert, sodass unabhängig von den auftretenden Kräften die einmal eingestellte Spaltbreite konstant gehalten wird. Ein weiterer Vorteil besteht darin, dass der Lagerbock positionsverstellbar eingerichtet ist.

Vor dem Betrieb der erfindungsgemäßen Vorrichtung ist es so möglich, das gewünschte Spaltmaß sowie die Ausrichtung der Antriebswalze zu der Hohltrommel optimal einzustellen. Insbesondere ist es so möglich, das Spaltmaß über den gesamten Spalt konstant voreinzustellen und so stets eine möglichst parallele Ausrichtung der Mantelflächen von Antriebswalze und Hohltrommel zu gewährleisten.

Die Erfindung ist dadurch gekennzeichnet, dass der Lagerbock zur Positionsverstellung um eine zumindest im Wesentlichen senkrecht zu einer Längsachse der Antriebswalze ausgerichteten Schwenkachse eines Schwenklagers relativ zu der Gehäusebasis schwenkbar eingerichtet ist. Das erfindungsgemäße Schwenklager wirkt sich vorteilhaft auf den Einstell- und Ausrichtvorgang der Antriebswalze aus. So kann die Ausrichtung der Antriebswalze sowie das Spaltmaß durch einfaches Verschwenken des Lagerbocks um die genannte Längsachse besonders komfortabel eingestellt werden.

Das erfindungsgemäße Schwenklager hat zudem den Vorteil, dass beim Verschwenken der Antriebswalze das Spaltmaß gehäusebasisseitig einer geringeren Spaltmaßänderung unterliegt, als das jeweilige Spaltmaß an der von der Gehäusebasis abgewandten Seite. Auf diese Weise lässt sich durch eine einfache Schwenkbewegung das in der Regel an der dem Gehäuse abgewandten Seite des Spaltes vorhandene größere Spaltmaß gegenüber dem gehäusebasisseitig regelmäßig geringeren Spaltmaß auf ein einheitliches Maß einstellen.

Eine bevorzugte Weiterbildung der Erfindung zeichnet sich dadurch aus, dass der Lagerbock als Winkelelement ausgebildet ist und einen Lagerbockboden sowie mindestens eine Lagerbockseitenfläche umfasst. Vorzugsweise ist der Lagerbock also L-förmlich ausgebildet, wobei der Lagerbockboden zu der Lagerbockseitenfläche, die ein Seitenteil des Lagerbocks bildet, rechtwinklig angeordnet ist.

Gemäß einer weiteren bevorzugten Ausbildung der Erfindung ist der Lagerbockboden auf einem sich horizontal erstreckenden Stützboden der Gehäusebasis aufliegend angeordnet. Vorteilhafter Weise werden so die Eigengewichtskraft der Antriebswalze, sowie in Richtung des Stützbodens auf die Antriebswalze einwirkende Kräfte über den Lagerbockboden auf den Stützboden der Gehäusebasis geleitet. Diese Abstützung ist auch während des Einstell- und Ausrichtvorgangs stets gewährleistet, sodass die Positionierung des Lagerbocks auf möglichst einfache Weise durchgeführt werden kann.

Gemäß einer weiteren bevorzugten Ausführungsform umfasst die Vorrichtung weiter mindestens ein Arretierungsmittel, das ausgebildet ist, den Lagerbock in einer Arretierstellung an der Gehäusebasis lösbar zu fixieren. Auf diese Weise wird sichergestellt, dass der Lagerbock in der Arretierstellung sicher an der Gehäusebasis fixiert ist, sodass die einmal eingestellte Position des Lagerbocks auch unter großer Krafteinwirkung stets gehalten wird. Durch Lösen des mindestens einen Arretierungsmittels kommt der Lagerbock von der Gehäusebasis insoweit frei, dass dessen Position einstellbar ist. Nach erfolgter Einstellung der gewünschten Lagerbockposition wird der Lagerbock mittels des mindestens einen Arretierungsmittels wieder an der Gehäusebasis sicher fixiert. Vorzugsweise bilden der Stützboden der Gehäusebasis sowie der Lagerbockboden einander zugewandte Klemmflächen, zwischen denen in der Arretierstellung durch das mindestens eine Arretierungsmittels die zur Positionsfixierung des Lagerbocks erforderliche Klemmkraft aufgebracht wird.

Eine weitere zweckmäßige Ausbildung der Erfindung ist dadurch gekennzeichnet, dass der Lagerbockboden für jedes der Arretierungsmittel eine langlochförmige Durchgangsausnehmung aufweist. Vorteilhafterweise ist es so möglich, die Position des Lagerbocks einzustellen, ohne den Lagerbock vollständig von der Gehäusebasis zu lösen. Die Langlöcher sind entsprechend des jeweils erforderlichen Positionierweges geformt bzw. weisen gegenüber dem mindestens einen Arretierungsmittel ein entsprechendes Übermaß auf, sodass sich die Arretierungsmittel in gelöster Stellung in den Langlöcher während der Positionsverstellung des Lagerbocks frei bewegen können.

Eine bevorzugte Weiterbildung der Erfindung zeichnet sich dadurch aus, dass die Gehäusebasis mindestens eine sich vertikal erstreckende Stützwand umfasst, die eine Gegenlage zu mindestens einem zwischen der Stützwand und der mindestens einen Lagerbockseitenfläche angeordnetem und zur Positionsverstellung des Lagerbocks gegenüber der Gehäusebasis eingerichtetem Stellmittel bildet. Mit anderen Worten ist der Lagerbock gegenüber dieser Stützwand abgestützt ausgeführt. Die Verstellung der Position kann - bei gleichzeitig auf den Lagerbock einwirkenden hohen Kräfte - auf diese Weise stets mit größter Präzision vorgenommen werden. Die Stellmittel können rein mechanische, beispielsweise als Gewindeschrauben, ausgeführt oder elektromechanisch, pneumatisch und/oder hydraulisch steuerbar eingerichtet sein.

Eine weitere zweckmäßige Ausgestaltung der Erfindung ist dadurch gekennzeichnet, dass das Schwenklager durch eine Ausnehmung in einem Bodenteil der Gehäusebasis und einem in diese Ausnehmung formschlüssig eingreifenden Vorsprung des Lagerbocks gebildet ist. Die Ausnehmung ist damit vorzugsweise integraler Bestandteil der Gehäusebasis und aus fertigungstechnischer Sicht einfach herzustellen. Aufgrund des konstruktiv vergleichsweisen einfachen Aufbaus des Schwenklagers ist dieses besonders robust und quasi wartungsfrei. Zudem ist das erfindungsgemäße Schwenklager ausgebildet, die auftretenden Kräfte aufzunehmen und den Lagerbock gegenüber der Gehäusebasis abzustützen.

Gemäß einer weiteren bevorzugten Ausbildung der Erfindung ist der Lagerbock eingerichtet, die Antriebswalze mittels mindestens zwei voneinander beabstandeten Achslagern zu lagern. Die beiden voneinander beabstandeten Achslager bieten den Vorteil einer präzisen Lagerung der Antriebswalze und wirken insbesondere den auf die Antriebswalze wirkenden großen Kräften entgegen. Auf diese Weise wird sowohl das Spaltmaß als auch die Ausrichtung der Antriebswalze unter allen Betriebsbedingungen stets gewährleistet.

Eine weitere zweckmäßige Ausbildung der Erfindung ist dadurch gekennzeichnet, dass zwischen dem Lagerbockboden und der Lagerbockseitenfläche mindestens ein Querversteifungselement angeordnet ist. So wird die Eigensteifigkeit des Lagerbocks erhöht und einem anderenfalls möglichen Verwinden des Lagerbocks bei Einwirkung hoher Haltekräfte entgegengewirkt. Andernfalls möglichen Abweichungen von der eingestellten Lagerbockposition bei wechselnder Krafteinwirkung werden so zuverlässig verhindert.

Des Weiteren wird die Aufgabe durch ein entsprechendes Verfahren mit den eingangs genannten Merkmalen gelöst, das sich durch zumindest im Wesentlichen parallelen Ausrichten der Antriebswalze zur Mantelfläche der Hohltrommel durch Verstellen der Position eines Lagerbocks, an dem die Antriebswalze gelagert ist, relativ zu der Gehäusebasis, auszeichnet. Die mit der erfindungsgemäßen Vorrichtung einhergehenden Vorteile gelten in gleicher Weise für das erfindungsgemäße Verfahren. Zur Vermeidung von Wiederholungen wird daher auf die zuvor genannten Vorzüge der erfindungsgemäßen Vorrichtung verwiesen und im Folgenden nur ergänzend auf einige ausgewählte Aspekte des erfindungsgemäßen Verfahrens näher eingegangen.

Die Erfindung ist dadurch gekennzeichnet, dass der Lagerbock zum Verstellen der Position um eine zumindest im Wesentlichen senkrecht zu einer Längsachse der Antriebswalze ausgerichtete Schwenkachse eines Schwenklagers relativ zu der Gehäusebasis geschwenkt wird.

Eine weitere zweckmäßige Ausgestaltung der Erfindung ist dadurch gekennzeichnet, dass der Lagerbock als Winkelelement ausgebildet ist und einen Lagerbockboden sowie mindestens eine Lagerbockseitenfläche umfasst und der Lagerbockboden auf einem sich horizontal erstreckenden Stützboden der Gehäusebasis aufliegt.

Eine bevorzugte Weiterbildung der Erfindung zeichnet sich durch lösbares Fixieren des Lagerbocks in einer Arretierstellung an der Gehäusebasis mittels Arretierungsmitteln aus.

Eine weitere zweckmäßige Ausgestaltung der Erfindung ist dadurch gekennzeichnet, dass das Verstellen der Position mittels mindestens einem Stellmittel erfolgt, das zwischen mindestens einer sich vertikal erstreckenden, eine Gegenlage bildenden Stützwand des Gehäuses und der mindestens einen Lagerbockseitenfläche des Lagerbocks angeordnet ist.

Weitere bevorzugte und/oder zweckmäßige Merkmale und Ausgestaltungen der Erfindung ergeben sich aus den Unteransprüchen und der Beschreibung. Besonders bevorzugte Ausführungsformen werden anhand der beigefügten Zeichnung näher erläutert. In der Zeichnung zeigt:
- Fig. 1: eine perspektivische Frontansicht der erfindungsgemäßen Vorrichtung,
- Fig. 2: eine perspektivische Rückansicht erfindungsgemäßen Vorrichtung,
- Fig. 3: eine perspektivische Detaildarstellung der Antriebswalze mit dem Lagerbock und
- Fig. 4: einen vergrößerte Detaildarstellung der Figur 2 gezeigten Rückansicht.

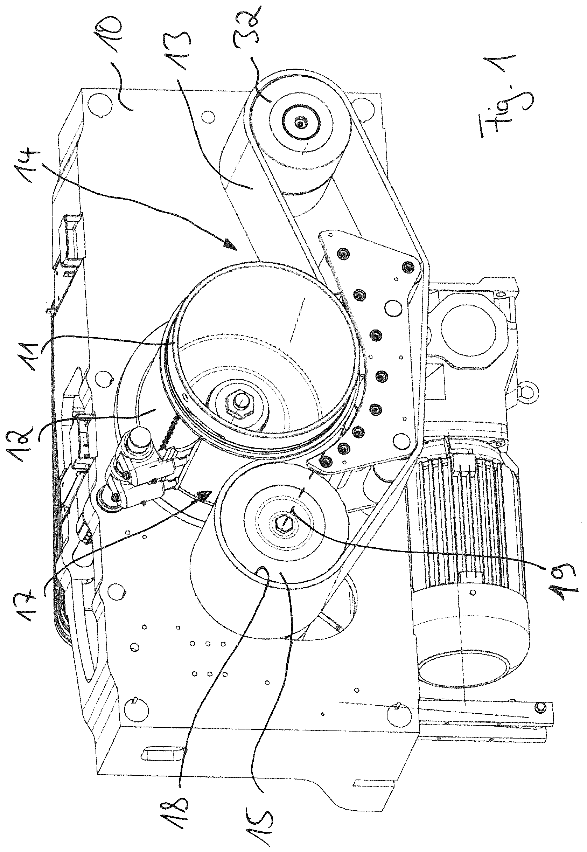

In Fig. 1 ist eine perspektivische Frontansicht der erfindungsgemäßen Vorrichtung zum Trennen von Stoffen unterschiedlicher Fließfähigkeit gezeigt. Die Vorrichtung umfasst eine Gehäusebasis 10. Wie in Figur 1 gezeigt, bildet die Gehäusebasis 10 ein Basisgestell, an dem sämtliche der Maschinenkomponenten angeordnet sind. An dieser Gehäusebasis 10 ist eine umlaufend angetriebene Hohltrommel 11 angeordnet. Die Hohltrommel 11 selbst weist eine perforierte Mantelfläche 12 auf. Diese Perforation ist in der Zeichnung aus Gründen der besseren Übersichtlichkeit nicht gezeigt.

Die erfindungsgemäße Vorrichtung umfasst weiter ein endloses Pressband 13. Das Pressband 13 ist ausgebildet, von außen an die Hohltrommel 11 unter Umschlingung eines Teils des Umfangs der Hohltrommel 11 angepresst zu werden. Die Hohltrommel 11 und das Pressband 13 bilden so einen Einzugskeil 14 für das - in der Zeichnung nicht gezeigte - Pressgut.

Wie in der Zeichnung gezeigt ist das Pressband 13 mittels mindestens einer Antriebswalze 15 sowie mindestens einer Lagerwalze 32 gelagert. Mittels der genannten Walzen 15, 32 wird das Pressband 13 vorgespannt an die Holtrommel 11 gedrückt.

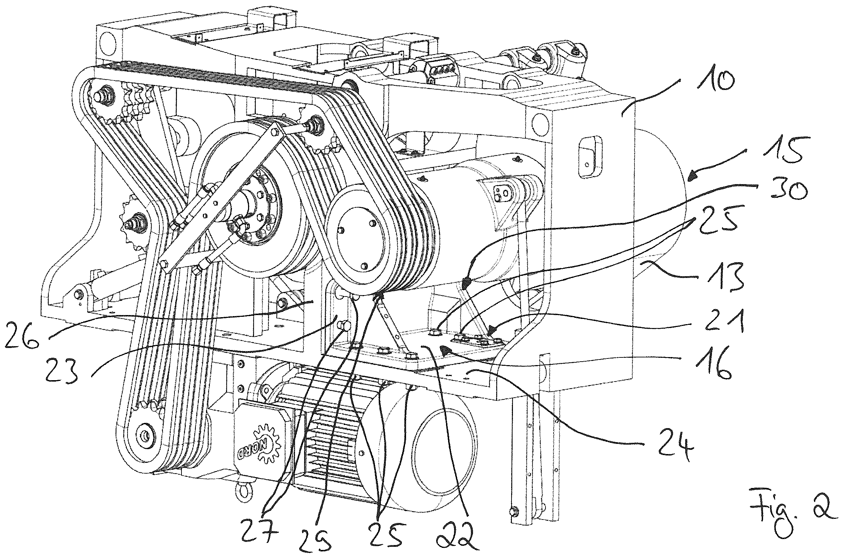

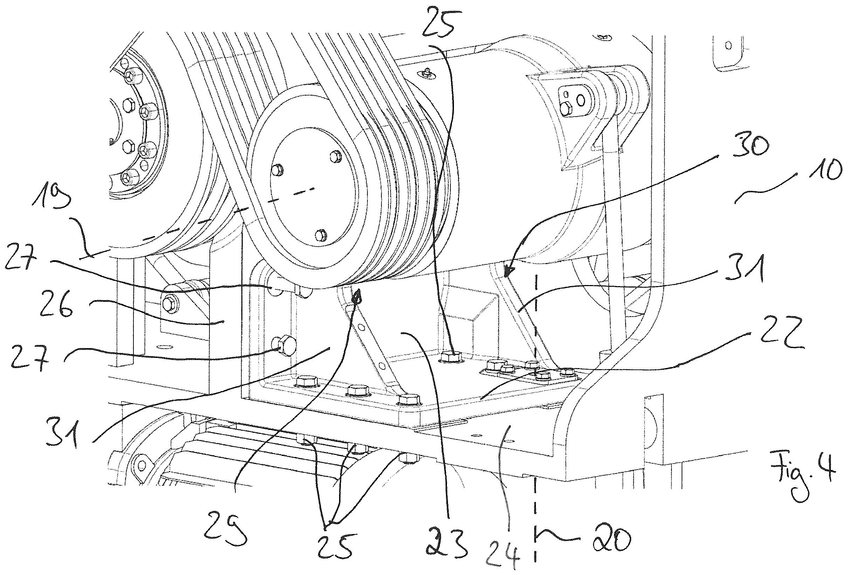

Wie in den Figuren 2 bis 4 gezeigt, ist die Antriebswalze 15 an einem Lagerbock 16 gelagert. Der Lagerbock 16 selbst ist an der Gehäusebasis 10 positionsverstellbar angeordnet. Durch Verändern der Position des Lagerbocks 16 ist auch die Position der Antriebswalze 15 veränderbar, sodass diese optimal ausgerichtbar ist.

Um ein Separiergut möglichst hoher Qualität zu erhalten, ist es erforderlich, dass die Breite des zwischen der Hohltrommel 11 und der Antriebswalze 15 gebildeten Spalts 17 (vgl. Fig. 1) über die gesamte Breite des Pressbands 13 möglichst konstant ist. Mit anderen Worten wird ein optimales Ergebnis beim Trennprozess erreicht, wenn der Abstand zwischen der Mantelfläche 12 der Hohltrommel 11 gegenüber der Antriebswalzenmantelfläche 18 über die gesamte Breite des Spaltes 17 konstant ist.

Aufgrund der Positionsverstellbarkeit des Lagerbocks 16 ist es möglich, die Antriebswalze 15 optimal im Hinblick auf eine möglichst konstante Spaltbreite auszurichten. Zudem kann die Spaltbreite insgesamt verändert und an verschiedene Betriebsbedingungen angepasst werden.

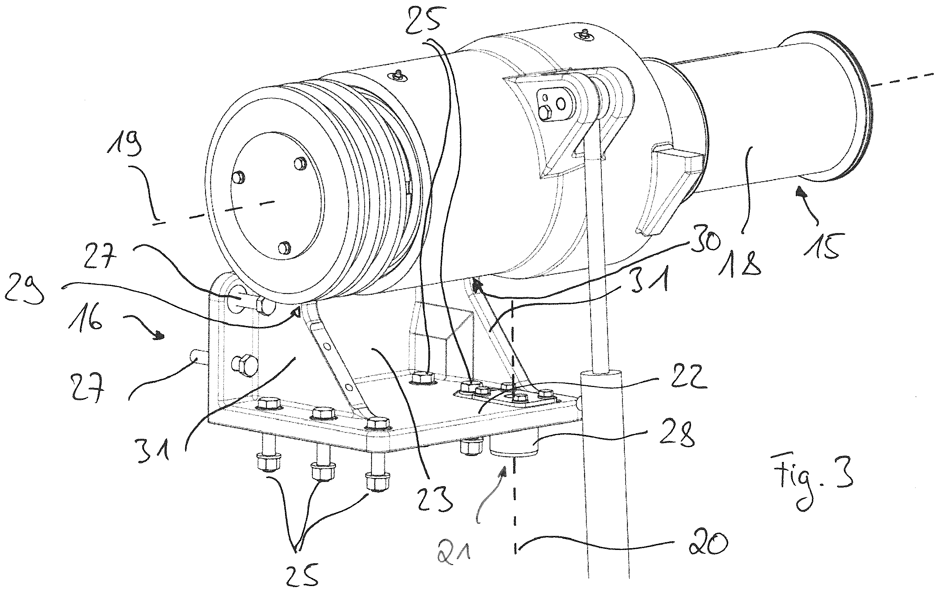

Vorzugsweise ist der Lagerbock 16 zur Positionsverstellung um eine - in Figur 3 ersichtliche - senkrecht zu einer Längsachse 19 der Antriebswalze 15 ausgerichteten Schwenkachse 20 eines Schwenklagers 21 relativ zu der Gehäusebasis 10 schwenkbar eingerichtet. Die Schwenkachse 20 ist optional gegenüber der Längsachse 19 nicht exakt in einem 90°-Winkel ausgerichtet, sondern kann vielmehr um einen hiervon geringfügig, beispielsweise um +/- 10°, abweichenden Winkel geneigt angeordnet sein, so dass diese nur im Wesentlichen senkrecht zu der Längsachse 19 der Antriebswalze 15 ausgerichtet ist.

Der Lagerbock 16 ist weitere bevorzugt als Winkelelement ausgebildet und umfasst einen Lagerbockboden 22 sowie mindestens eine Lagerbockseitenfläche 23, die ein auf dem Lagerbockboden 22 senkrecht stehendes Seitenteil bildet. Wie in Figur 2 gezeigt, ist der Lagerbockboden 22 auf einem sich horizontal erstreckenden Stützboden 24 der Gehäusebasis 10 aufliegend angeordnet.

Bevorzugt umfasst die erfindungsgemäße Vorrichtung mindestens ein Arretierungsmittel 25, das ausgebildet ist, den Lagerbock 16 in einer Arretierstellung an der Gehäusebasis 10 lösbar zu fixieren. Als Arretierungsmittel 25 kommen beispielsweise die in der Zeichnung gezeigten Gewindebolzen zum Einsatz. Vorzugsweise kommen zwischen vier und acht der Gewindebolzen zum Einsatz. Durch Lösen der Arretierungsmittel 25 kann die Position des Lagerbocks 16 durch Verschwenken um die Schwenkachse 20 verändert werden. Nachdem die gewünschte neue Position des Lagerbocks 16 eingestellt worden ist, wird die Position des Lagerbocks 16 mittels der Arretierungsmittel 25 fixiert. Dies erfolgt beispielsweise, durch Anziehen der Gewindebolzen, sodass eine Klemmverbindung zwischen dem Lagerbockboden 22 und dem Stützboden 24 der Gehäusebasis 10 entsteht.

Vorzugsweise weist der Lagerbockboden 22 für jedes der Arretierungsmittel 25 eine - in der Zeichnung nicht gezeigte - langlochförmige Durchgangsausnehmung auf. Die Durchgangsausnehmung sind insbesondere so gewählt, dass die Arretierungsmittel 25 mit entsprechendem Spiel durch diese durchgeführt sind, sodass die Arretierungsmittel 25 sich im nicht arretierten Zustand innerhalb der Langlöcher im gewissen Maß frei bewegen können.

Weiter bevorzugt umfasst die Gehäusebasis 10 mindestens eine sich vertikal erstreckende Stützwand 26. Die Stützwand 26 bildet eine Gegenlage zu mindestens einem zwischen der Stützwand 26 und der mindestens einen Lagerbockseitenfläche 23 angeordnetem und zur Positionsverstellung des Lagerbocks 16 gegenüber der Gehäusebasis 10 eingerichtetem Stellmittel 27. Das oder die Stellmittel 27 wird bzw. werden vorzugsweise durch Gewindebolzen gebildet, die über einen Gewindegang durch die Lagerbockseitenfläche geführt sind. Die Gewindebolzen bilden so Stellschrauben, mittels derer die Position des Lagerbocks 16 im nicht- arretierten Zustand durch Abstützen gegenüber der Stützwand 26 der Gehäusebasis 10 präzise einstellbar ist.

Das Schwenklager 21 wird vorteilhafter Weise durch eine - in der Zeichnung nicht gezeigte - Ausnehmung in einem Bodenteil der Gehäusebasis 10, insbesondere in dem Stützboden 24, und einen in diese Ausnehmung formschlüssig eingreifenden Vorsprung 28 des Lagerbocks 16 gebildet. Die Ausnehmung ist vorzugweise derart ausgebildet, dass diese den Vorsprung 28 formschlüssig aufnimmt und so ein Gleitlager bildet. Der Vorsprung 28 ist weiter bevorzugt als zylinderförmiges Zapfenelement mit kreisrundem Querschnitt ausgebildet. Dementsprechend weist die Ausnehmung vorzugsweise ebenfalls einen kreisrunden Querschnitt auf, dessen Durchmesser etwas größer als der Außendurchmesser des Zapfenelements gewählt ist.

Vorteilhafter Weise ist der Lagerbock 16 ferner eingerichtet, die Antriebswalze 15 mittels mindestens zwei voneinander beabstandeten Achslagern 29, 30 zu lagern. Wie in Fig. 2 bis 4 gezeigt, sind die Achslager 29, 30 in axialer Richtung der Antriebswalze 15 voneinander beabstandet. Zur Versteifung des Lagerbocks 16 ist zwischen dem Lagerbockboden 22 und der Lagerbockseitenfläche 23 mindestens ein Querversteifungselement 31 angeordnet.

Die vorliegende Erfindung umfasst auch das eingangs genannte Verfahren zum Einrichten der zuvor beschriebenen Vorrichtung zum Trennen von Stoffen unterschiedlicher Fließfähigkeit. Zum Einrichten der Vorrichtung vor dem Betrieb derselben wird beispielsweise zunächst die Breite des Spaltes 17 zwischen der Hohltrommel 11 und der Antriebswalze 15 nach den jeweiligen Eigenschaften des zu verarbeitenden Pressguts gewählt. Insbesondere erfolgt dann ein Ausrichten der Antriebswalze 15 zur Mantelfläche 12 der Hohltrommel 11 durch Verstellen der Position des Lagerbocks 16, an dem die Antriebswalze 15 gelagert ist, relativ zu der Gehäusebasis 10.

Das Ausrichten erfolgt vorzugsweise zumindest im Wesentlichen parallel zueinander, d.h. die Antriebswalze 15 wird entweder parallel zu der Mantelfläche 12 der Hohltrommel 11 oder nur geringfügig davon abweichend ausgerichtet, beispielsweise mit einer maximalen Abweichung gegenüber einer Parallelausrichtung von +/- 10 Grad.

Vorzugsweise wird der Lagerbock 16 zum Verstellen der Position um eine zumindest im Wesentlichen senkrecht zu der Längsachse 19 der Antriebswalze 15 ausgerichteten Schwenkachse des Schwenklagers 21 relativ zu der Gehäusebasis 10 geschwenkt. Es ist weiter von Vorteil, wenn der als Winkelelement ausgebildete Lagerbock 16, der den Lagerbockboden 22 sowie die mindestens eine Lagerbockseitenfläche 23 umfasst, dabei mit seinem Lagerbockboden 22 auf dem sich horizontal erstreckenden Stützboden 24 der Gehäusebasis 10 aufliegt.

Gemäß einer vorteilhaften Variante des erfindungsgemäßen Verfahrens erfolgt das lösbare Fixieren des Lagerbocks 16 in einer Arretierstellung an der Gehäusebasis 10 mittels den zuvor beschriebenen Arretierungsmitteln 25.

Bevorzugt erfolgt das Verstellen der Position mittels des mindestens einen Stellmittels 27, das zwischen der mindestens einen sich vertikal erstreckenden Stützwand 26 des Gehäuses bzw. der Gehäusebasis 10, die die zuvor beschriebene Gegenlage bildet, und der mindestens einen Lagerbockseitenfläche 23 des Lagerbocks 16 angeordnet ist. In der Zeichnung sind die Stellmittel 27 in einer möglichen Ausführung als Gewindeschrauben gezeigt. Neben einer solchen rein mechanischen Verstellung ist es auch möglich, dass die Stellmittel als elektromotorische, pneumatische oder hydraulische Verstellelemente ausgeführt sind, sodass die Positionsverstellung des Lagerbocks 16 steuerbar ist.

## Patentansprüche

1. Vorrichtung zum Trennen von Stoffen unterschiedlicher Fließfähigkeit, umfassend
eine Gehäusebasis (10),
eine an der Gehäusebasis (10) angeordnete, umlaufend angetriebene Hohltrommel (11) mit einer perforierten Mantelfläche (12),
ein von außen an die Hohltrommel (11) unter Umschlingung eines Teils des Umfangs der Hohltrommel (11) anpressbares endloses Pressband (13), das zusammen mit der Hohltrommel (11) einen Einzugskeil (14) für das Pressgut bildet, wobei
das Pressband (13) mittels mindestens einer Antriebswalze (15) sowie mindestens einer Lagerwalze (32) gelagert ist,
wobei die Antriebswalze (15) an einem Lagerbock (16) gelagert ist und der Lagerbock (16) an der Gehäusebasis (10) positionsverstellbar angeordnet ist
**dadurch gekennzeichnet, dass**
der Lagerbock (16) zur Positionsverstellung um eine zumindest im Wesentlichen senkrecht zu einer Längsachse (19) der Antriebswalze (15) ausgerichteten Schwenkachse (20) eines Schwenklagers (21) relativ zu der Gehäusebasis (10) schwenkbar eingerichtet ist.

2. Vorrichtung nach Anspruch 1, **dadurch gekennzeichnet, dass** der Lagerbock (16) als Winkelelement ausgebildet ist und einen Lagerbockboden (22) sowie mindestens eine Lagerbockseitenfläche (23) umfasst.

3. Vorrichtung nach Anspruch 2, **dadurch gekennzeichnet, dass** der Lagerbockboden (22) auf einem sich horizontal erstreckenden Stützboden (24) der Gehäusebasis (10) aufliegend angeordnet ist.

4. Vorrichtung nach einem der Ansprüche 1 bis 3, weiter umfassend mindestens ein Arretierungsmittel (25), das ausgebildet ist, den Lagerbock (16) in einer Arretierstellung an der Gehäusebasis (10) lösbar zu fixieren.

5. Vorrichtung nach einem der Ansprüche 2 bis 4, **dadurch gekennzeichnet, dass** der Lagerbockboden (22) für jedes der Arretierungsmittel (25) eine langlochförmige Durchgangsausnehmung aufweist.

6. Vorrichtung nach einem der Ansprüche 2 bis 5, **dadurch gekennzeichnet, dass** die Gehäusebasis (10) mindestens eine sich vertikal erstreckende Stützwand (26) umfasst, die eine Gegenlage zu mindestens einem zwischen der Stützwand (26) und der mindestens einen Lagerbockseitenfläche (23) angeordnetem und zur Positionsverstellung des Lagerbocks (16) gegenüber der Gehäusebasis (10) eingerichtetem Stellmittel (27) bildet.

7. Vorrichtung nach einem der Ansprüche 1 bis 6, **dadurch gekennzeichnet, dass** das Schwenklager (21) durch eine Ausnehmung in einem Bodenteil der Gehäusebasis (10) und einem in diese Ausnehmung formschlüssig eingreifenden Vorsprung (28) des Lagerbocks (16) gebildet ist.

8. Vorrichtung nach einem der Ansprüche 1 bis 7, **dadurch gekennzeichnet, dass** der Lagerbock (16) eingerichtet ist, die Antriebswalze (15) mittels mindestens zwei voneinander beabstandeten Achslagern (29, 30) zu lagern.

9. Vorrichtung nach einem der Ansprüche 2 bis 8, **dadurch gekennzeichnet, dass** zwischen dem Lagerbockboden (22) und der Lagerbockseitenfläche (23) mindestens ein Querversteifungselement (31) angeordnet ist.

10. Verfahren zum Einrichten einer Vorrichtung zum Trennen von Stoffen unterschiedlicher Fließfähigkeit, wobei die Vorrichtung eine Gehäusebasis (10), eine an der Gehäusebasis angeordnete, umlaufend angetriebene Hohltrommel (11) mit einer perforierten Mantelfläche (12), ein von außen an die Hohltrommel (11) unter Umschlingung eines Teils des Umfangs der Hohltrommel (11) anpressbares endloses Pressband (13), das zusammen mit der Hohltrommel (11) einen Einzugskeil (14) für das Pressgut bildet, umfasst, und wobei das Pressband (13) mittels mindestens einer Antriebswalze (15) sowie mindestens einer Lagerwalze (32) gelagert ist,
umfassend
zumindest im Wesentlichen paralleles Ausrichten der Antriebswalze (15) zur der Mantelfläche (12) der Hohltrommel (11) durch Verstellen der Position eines Lagerbocks (16), an dem die Antriebswalze (15) gelagert ist, relativ zu der Gehäusebasis (10),
**dadurch gekennzeichnet, dass** der Lagerbock (16) zum Verstellen der Position um eine zumindest im Wesentlichen senkrecht zu einer Längsachse (19) der Antriebswalze (15) ausgerichteten Schwenkachse (20) eines Schwenklagers (21) relativ zu der Gehäusebasis (10) geschwenkt wird.

11. Verfahren nach Anspruch 10, **dadurch gekennzeichnet, dass** der Lagerbock (16) als Winkelelement ausgebildet ist und einen Lagerbockboden (22) sowie mindestens eine Lagerbockseitenfläche (23) umfasst und der Lagerbockboden (22) auf einem sich horizontal erstreckenden Stützboden (24) der Gehäusebasis (10) aufliegt.

12. Verfahren nach einem der Ansprüche 10oder 11, **gekennzeichnet durch** lösbares Fixieren des Lagerbocks (16) in einer Arretierstellung an der Gehäusebasis (10) mittels Arretierungsmitteln (25).

13. Verfahren nach einem der Ansprüche 10 bis 12, **dadurch gekennzeichnet, dass** das Verstellen der Position mittels mindestens einem Stellmittel (27) erfolgt, das zwischen mindestens einer sich vertikal erstreckenden, eine Gegenlage bildenden Stützwand (26) der Gehäusebasis (10) und der mindestens einen Lagerbockseitenfläche (23) des Lagerbocks (16) angeordnet ist.

## Claims

1. An apparatus for separating substances of different flowability, comprising
a housing base (10),
a hollow drum (11) having a perforated peripheral surface (12) which is arranged on the housing base (10) and is driven in a revolving manner,
a continuous press belt (13) which can be pressed from outside against the hollow drum (11), while wrapping around a portion of the circumference of the hollow drum (11), and which, together with the hollow drum (11), forms an intake wedge (14) for the material to be pressed, wherein
the press belt (13) is mounted by means of at least one drive roller (15) and at least one bearing roller (32),
wherein
the drive roller (15) is mounted on a bearing support (16), and the bearing support (16) is arranged on the housing base (10) so as to be adjustable in terms of position,
**characterized in that**.
the bearing support (16), for adjustment of its position, is adapted to be pivotable relative to the housing base (10) about a pivot axis (20), oriented at least substantially perpendicularly to a longitudinal axis (19) of the drive roller (15), of a pivot bearing (21).

2. The apparatus according to claim 1, wherein the bearing support (16) is in the form of an angular element and comprises a bearing support base (22) and at least one bearing support side surface (23).

3. The apparatus as claimed in claim 2, wherein the bearing support base (22) is arranged so that it lies on a horizontally extending support base (24) of the housing base (10).

4. The apparatus as claimed in any one of claims 1 to 3, further comprising at least one locking means (25) which is configured to releasably fix the bearing support (16) to the housing base (10) in a locking position.

5. The apparatus as claimed in any one of claims 2 to 4, wherein the bearing support base (22) has an elongated hole-like passage opening for each of the locking means (25).

6. The apparatus as claimed in any one of claims 2 to 5, wherein the housing base (10) comprises at least one vertically extending support wall (26) which forms a counter-support for at least one adjusting means (27) which is arranged between the support wall (26) and the at least one bearing support side surface (23) and is adapted for adjusting the position of the bearing support (16) relative to the housing base (10).

7. The apparatus as claimed in any one of claims 1 to 6, wherein the pivot bearing (21) is formed by a recess in a bottom part of the housing base (10) and a protrusion (28) of the bearing support (16) which engages in a positive-locking manner into this recess.

8. The apparatus as claimed in any one of claims 1 to 7, wherein the bearing support (16) is adapted to mount the drive roller (15) by means of at least two mutually spaced apart axle bearings (29, 30).

9. The apparatus as claimed in any one of claims 2 to 8, wherein at least one transverse stiffening element (31) is arranged between the bearing support base (22) and the bearing support side surface (23).

10. A method for adapting an apparatus for the separation of substances of different flowability, wherein the apparatus comprises a housing base (10), a hollow drum (11) having a perforated peripheral surface (12) which is arranged on the housing base and is driven in a revolving manner, a continuous press belt (13) which can be pressed from outside against the hollow drum (11), while wrapping around a portion of the circumference of the hollow drum (11), and which, together with the hollow drum (11), forms an intake wedge (14) for the material to be pressed, and wherein the press belt (13) is mounted by means of at least one drive roller (15) and at least one bearing roller (32),
which method comprises
orienting the drive roller (15) at least substantially parallel relative to the peripheral surface (12) of the hollow drum (11) by adjustment of the position of a bearing support (16), on which the drive roller (15) is mounted, relative to the housing base (10),
**characterized in that**
the bearing support (16), for adjustment of its position, is pivoted relative to the housing base (10) about a pivot axis (20), oriented at least substantially perpendicularly to a longitudinal axis (19) of the drive roller (15), of a pivot bearing (21).

11. The method according to claim 10, wherein the bearing support (16) is in the form of an angular element and comprises a bearing support base (22) and at least one bearing support side surface (23), and the bearing support base (22) lies on a horizontally extending support base (24) of the housing base (10).

12. The method as claimed in any one of claims 10 to 11, wherein the bearing support (16) is releasably fixed to the housing base (10) in a locking position by means of locking means (25).

13. The method as claimed in any one of claims 10 to 12, wherein the adjustment of the position takes place by means of at least one adjusting means (27) which is arranged between at least one vertically extending support wall (26), forming a counter-support, of the housing base (10) and the at least one bearing support side surface (23) of the bearing support (16).

## Revendications

1. Dispositif pour la séparation de substances de fluidité différente, comprenant
une base de boîtier (10),
un tambour creux (11) agencé sur la base de boîtier (10), entraîné en rotation, avec une surface d'enveloppe perforée (12),
une bande de pressage sans fin (13) pouvant être pressée de l'extérieur contre le tambour creux (11) en s'enroulant autour d'une partie de la périphérie du tambour creux (11), qui forme conjointement avec le tambour creux (11) un coin d'introduction (14) pour le produit à presser,
la bande de pressage (13) étant montée au moyen d'au moins un rouleau d'entraînement (15) ainsi que d'au moins un rouleau de palier (32),
le rouleau d'entraînement (15) étant monté sur un support de palier (16) et le support de palier (16) étant agencé sur la base de boîtier (10) de manière à pouvoir être réglé en position,
**caractérisé en ce que**
le support de palier (16) est adapté de manière à pouvoir pivoter par rapport à la base de boîtier (10) pour le réglage en position autour d'un axe de pivotement (20) d'un palier de pivotement (21) orienté au moins essentiellement perpendiculairement à un axe longitudinal (19) du rouleau d'entraînement (15).

2. Dispositif selon la revendication 1, **caractérisé en ce que** le support de palier (16) est réalisé sous forme d'élément angulaire et comprend un fond de support de palier (22) ainsi qu'au moins une surface latérale de support de palier (23).

3. Dispositif selon la revendication 2, **caractérisé en ce que** le fond de support de palier (22) est agencé en appui sur un fond de soutien (24) s'étendant horizontalement de la base de boîtier (10).

4. Dispositif selon l'une quelconque des revendications 1 à 3, comprenant en outre au moins un moyen de blocage (25) configuré pour fixer de manière amovible le support de palier (16) sur la base de boîtier (10) dans une position de blocage.

5. Dispositif selon l'une quelconque des revendications 2 à 4, **caractérisé en ce que** le fond de support de palier (22) présente un évidement traversant en forme de trou oblong pour chacun des moyens de blocage (25).

6. Dispositif selon l'une quelconque des revendications 2 à 5, **caractérisé en ce que** la base de boîtier (10) comprend au moins une paroi de soutien (26) s'étendant verticalement, qui forme un contre-appui contre au moins un moyen de réglage (27) agencé entre la paroi de soutien (26) et l'au moins une surface latérale de support de palier (23) et adapté pour le réglage en position du support de palier (16) par rapport à la base de boîtier (10).

7. Dispositif selon l'une quelconque des revendications 1 à 6, **caractérisé en ce que** le palier de pivotement (21) est formé par un évidement dans une partie de fond de la base de boîtier (10) et par une saillie (28) du support de palier (16) qui s'engage par complémentarité de forme dans cet évidement.

8. Dispositif selon l'une quelconque des revendications 1 à 7, **caractérisé en ce que** le support de palier (16) est adapté pour monter le rouleau d'entraînement (15) au moyen d'au moins deux paliers d'axe (29, 30) espacés l'un de l'autre.

9. Dispositif selon l'une quelconque des revendications 2 à 8, **caractérisé en ce qu'**au moins un élément de rigidification transversale (31) est agencé entre le fond de support de palier (22) et la surface latérale de support de palier (23).

10. Procédé de mise en place d'un dispositif pour la séparation de substances de fluidité différente, le dispositif comprenant une base de boîtier (10), un tambour creux (11) agencé sur la base de boîtier, entraîné en rotation, avec une surface d'enveloppe perforée (12), une bande de pressage sans fin (13) pouvant être pressée de l'extérieur contre le tambour creux (11) en s'enroulant autour d'une partie de la périphérie du tambour creux (11), qui forme conjointement avec le tambour creux (11) un coin d'introduction (14) pour le produit à presser, et la bande de pressage (13) étant montée au moyen d'au moins un rouleau d'entraînement (15) ainsi que d'au moins un rouleau de palier (32),
comprenant
une orientation au moins essentiellement parallèle du rouleau d'entraînement (15) par rapport à la surface d'enveloppe (12) du tambour creux (11) par réglage de la position d'un support de palier (16), sur lequel le rouleau d'entraînement (15) est monté, par rapport à la base de boîtier (10),
**caractérisé en ce que**, pour régler la position, le support de palier (16) est pivoté par rapport à la base de boîtier (10) autour d'un axe de pivotement (20) d'un palier de pivotement (21) orienté au moins essentiellement perpendiculairement à un axe longitudinal (19) du rouleau d'entraînement (15).

11. Procédé selon la revendication 10, **caractérisé en ce que** le support de palier (16) est réalisé sous forme d'élément angulaire et comprend un fond de support de palier (22) ainsi qu'au moins une surface latérale de support de palier (23), et le fond de support de palier (22) s'appuie sur un fond de soutien (24) s'étendant horizontalement de la base de boîtier (10).

12. Procédé selon l'une quelconque des revendications 10 ou 11, **caractérisé par** la fixation amovible du support de palier (16) dans une position de blocage sur la base de boîtier (10) au moyen de moyens de blocage (25).

13. Procédé selon l'une quelconque des revendications 10 à 12, **caractérisé en ce que** le réglage de la position est effectué au moyen d'au moins un moyen de réglage (27) qui est agencé entre au moins une paroi de soutien (26) de la base de boîtier (10) s'étendant verticalement, formant un contre-appui, et l'au moins une surface latérale de support de palier (23) du support de palier (16).
